# EUROPÄISCHE PATENTSCHRIFT

(11) **EP 1 597 117 B1**
(45) Veröffentlichungstag und Bekanntmachung des Hinweises auf die Patenterteilung: **20.09.2006**
(21) Anmeldenummer: 04701917.9
(22) Anmeldetag: 14.01.2004
(51) Int. Cl.: B60R 16/02

(54) **VORRICHTUNG UND VERFAHREN ZUR ZENTRALEN ON-BOARD DIAGNOSE FÜR KRAFTFAHRZEUGE**
DEVICE AND METHOD FOR CENTRAL ON-BOARD DIAGNOSIS FOR MOTOR VEHICLES
DISPOSITIF ET PROCEDE DE DIAGNOSTIC EMBARQUE CENTRAL POUR VEHICULES AUTOMOBILES

(30) Priorität: 21.02.2003 DE 10307343
(43) Veröffentlichungstag der Anmeldung: 23.11.2005
(73) Patentinhaber: AUDI AG, 85045 Ingolstadt (DE); Volkswagen AG, 38436 Wolfsburg (DE)
(72) Erfinder: SIEBEL, Ulrich, 13465 Berlin (DE); HENECKER, Frank, 85101 Lenting (DE); BREUER, Andreas, 29356 Bröckel (DE)
(74) Vertreter: Patzelt, Heike Anna Maria
(86) Internationale Anmeldenummer: PCT/EP2004/000190
(87) Internationale Veröffentlichungsnummer: WO 2004/074048

(56) Entgegenhaltungen:
- EP-A- 1 069 422
- DE-A- 3 926 097
- DE-A- 10 013 463
- DE-A- 10 051 781
- US-A- 5 056 023
- US-B1- 6 236 917

## Beschreibung

Die vorliegende Erfindung betrifft eine Vorrichtung zur On-Board-Diagnose eines Kraftfahrzeugsystems, das mehrere, miteinander vernetzte Steuergeräte aufweist. Ferner betrifft die vorliegende Erfindung ein entsprechendes Verfahren zur On-Board-Diagnose eines Kraftfahrzeugsystems.

Die Fehlerdiagnose von Steuergeräten und den damit gesteuerten Komponenten eines Kraftfahrzeugs wird vielfach ausschließlich mittels Eigendiagnose durch das Steuergerät selbst durchgeführt. Dies bedeutet, dass die Diagnose nur auf das Steuergerät mit den jeweils gesteuerten Komponenten beschränkt ist. Falls durch die Eigendiagnose ein Fehler ermittelt wird, wird eine Fehlermeldung in dem Steuergerät abgespeichert. In einer Werkstatt wird dann mit Hilfe eines Werkstatttesters die Fehlermeldung abgerufen. Da die Eigendiagnose nur jeweils ein Steuergerät beziehungsweise dessen gesteuerte Komponenten betrifft, können damit keine systemübergreifenden Fehler detektiert werden. Da jedoch immer mehr Steuergeräte in Kraftfahrzeugen verbaut werden, die gegebenenfalls miteinander vernetzt sind, ist es zunehmend von Bedeutung, auch eine Fehlerdiagnose in diesen vernetzten Systemen vornehmen zu können.

Die Schwierigkeit einer systemübergreifenden Fehlerdiagnose besteht darin, dass die Steuergeräte und gesteuerten Komponenten in der Regel von verschiedenen Herstellern stammen, und daher unterschiedliche Realisierungen beziehungsweise Interpretationen von Spezifikationen erfolgen können.

Ein systemübergreifendes Diagnoseverfahren ist aus der deutschen Offenlegungsschrift DE 100 51 781 A1, das die Merkmale des Oberbegriffs der Ansprüche 1 und 4 zeigt, bekannt. Dort erfolgt die Diagnose in zwei Dort erfolgt die Diagnose in zwei Stufen, nämlich einer Komponentendiagnose und einer zentralen Systemdiagnose, wobei von der Komponentendiagnose- eine Systemgröße und ein der Systemgröße zugeordneter Zustand als Ergebnis an die zentrale Systemdiagnose ausgegeben werden. Sogenannte Modelldaten der Komponenten und des Systems werden in einer Funktions-Matrix gespeichert. Die Verknüpfung der Zustände der Systemgrößen mit Funktionszuständen und die Bestimmung fehlerhafter Funktionen erfolgt mit Hilfe eines Funktions-Matrix-Tensors. Nachteilig dabei ist, dass die Funktionssteuergeräte mit der Diagnose jeweils stark belastet sind und darüber hinaus an die übergeordnete Diagnoseeinheit in der Regel steuergerätspezifisch verschiedenartige Fehlercodes senden.

Aus der Druckschrift EP 1 069 422 A1 ist ein fahrzeugexternes Diagnosesystem bekannt. Dabei werden von mehreren Steuergeräten die Zustandsdaten an eine Diagnoseeinheit im Fahrzeug gesandt und dort vorverarbeitet oder für die Weiterverarbeitung koordiniert. Über eine drahtlose Verbindung werden die Daten an einen Diagnoserechner übermittelt, wo Sie entsprechend ausgewertet werden.

Die Aufgabe der vorliegenden Erfindung besteht somit darin, ein vereinfachtes On-Board-Diagnoseverfahren sowie eine entsprechende vereinfachte On-Board-Diagnosevorrichtung vorzuschlagen.

Erfindungsgemäß wird diese Aufgabe gelöst durch eine On-Board-Diagnose-Vorrichtung eines Kraftfahrzeugsystems, das mehrere miteinander vernetzte Steuergeräte aufweist, mit einer Aufnahmeeinrichtung, die mit dem Kraftfahrzeugsystem verbindbar ist, zur Aufnahme von ausschließlich Zustandsdaten, die keine Diagnoseinformation enthalten, von den mehreren Steuergeräten, und einer Recheneinrichtung, die an die Aufnahmeeinrichtung angeschlossen ist, zum zentralen Durchführen einer vollständigen Fehlerdiagnose on-board für Steuergeräte und Komponenten des Kraftfahrzeugsystems auf der Grundlage der Zustandsdaten.

Ferner ist erfindungsgemäß vorgesehen ein On-Board-Diagnose-Verfahren eines Kraftfahrzeugsystems, das mehrere miteinander vernetzte Steuergeräte aufweist, durch Bereitstellen von ausschließlich Zustandsdaten, die keine Diagnoseinformation enthalten, durch die mehreren Steuergeräte und zentrales Durchführen einer vollständigen Fehlerdiagnose on-board für Steuergeräte und Komponenten des Kraftfahrzeugsystems auf der Grundlage der Systemdaten.

Durch die zentrale Durchführung der Fehlerdiagnose können systemübergreifenden Fehler erkannt beziehungsweise eine Fehlereingrenzung für das Gesamtsystem vorgenommen werden.

Ferner ist es möglich, durch das zentrale Durchführen der Fehlerdiagnose auf viele kleine Speichereinheiten und Bereitstellung von Rechnerkapazitäten in den einzelnen Steuergeräten zu verzichten, und ein entsprechender Speicher einschließlich der notwendigen Rechnerkapazität ist lediglich in der zentralen Diagnosevorrichtung vorzusehen. Damit kann von der historischen Entwicklungsbahn abgegangen werden, bei der stets von Steuergeräten ausgegangen wurde, die mit Eigendiagnosemechanismen versehen sind. Vielmehr ist es nun möglich, Steuergeräte von unterschiedlichen Zulieferern problemlos miteinander zu vernetzen und die durch die Steuergeräte bereitgestellten Zustandsdaten, die noch keine Diagnose enthalten, zentral für eine Diagnose einzusetzen.

Vorzugsweise wird die Fehlerdiagnose basierend auf einem mathematischen Modell durchgeführt. Die modellbasierte Fehlerdiagnose hat den Vorteil, dass keine übermäßig großen Datenbanken in einzelnen Diagnose- oder Steuergeräten abgelegt werden müssen. Des Weiteren können durch das modellbasierte Verfahren auch sogenannte unbekannte Fehlerursachen detektiert werden. Dabei handelt es sich um Fehlerursachen, die mit den bekannten Fehlercodes nicht abgedeckt sind. Diese Fehlerursachen lassen sich durch die im Modell hinterlegten Funktionsabhängigkeiten ermitteln. Dabei kann beispielsweise durch Schnittmengenbildung mehrerer Fehlersymptome beziehungsweise Wirkungszusammenhänge auf defekte Komponenten geschlossen werden.

Außerdem können durch die modellbasierte Fehlerdiagnose auch Mehrfachfehler erkannt werden, die durch mehrere Einzelfehler verursacht und beispielsweise von einem Mechaniker nicht ohne weiteres zu ermitteln sind. Darüber hinaus können durch die modellbasierte, zentrale Diagnose auch sogenannte Meldeschauer verhindert werden, die durch einen Fehler verursacht werden und sich beispielsweise auf mehrere Steuergeräte auswirken und entsprechend viele Fehlermeldungen hervorrufen.

Die erfindungsgemäße Vorrichtung kann über ein eigenes Diagnosenetzwerk verfügen, mit dem sämtliche Funktionssteuergeräte ausschließlich zum Zwecke der Diagnose miteinander verbunden sind. Ein solches Diagnosenetzwerk hat den Vorteil, dass die Diagnose unabhängig von jeglichen Steuerbussystemen durchgeführt werden kann.

Die On-Board-Diagnosevorrichtung kann als eigenes Gerät beziehungsweise Diagnosesteuergerät realisiert sein. Dadurch könnte das Diagnosesteuergerät an einer beliebigen Position in das Kraftfahrzeug eingebaut werden.

Alternativ kann die erfindungsgemäße On-Board-Diagnosevorrichtung auch in ein Funktionssteuergerät integriert sein. Diese Variante kann bauliche und kostenbezogene Vorteile besitzen. Damit stellt das Funktionssteuergerät eine Einheit dar, die sowohl Funktions- als auch Diagnosevorrichtung ist. Mit einer derartigen funktionalen Einheit können dann eben auch systemübergreifende Diagnosen durchgeführt werden.

In einer speziellen Ausführungsform kann ein Kraftfahrzeugsystem mit mehreren erfindungsgemäßen, unabhängigen, für sich zentral arbeitenden On-Board-Diagnosevorrichtungen ausgestattet sein. In diesem Fall ist jede der Vorrichtungen zentral für eine Gruppe von Steuergeräten, die jeweils nur ihre Zustandsdaten liefern, zuständig. Die Vorrichtungen sind bei dieser Variante unabhängig voneinander, d. h. es findet zum Zwecke der Diagnose kein Datenaustausch zwischen ihnen statt, so dass für jede Gruppe eine für sich zentrale Fehlerdiagnose durchgeführt wird.

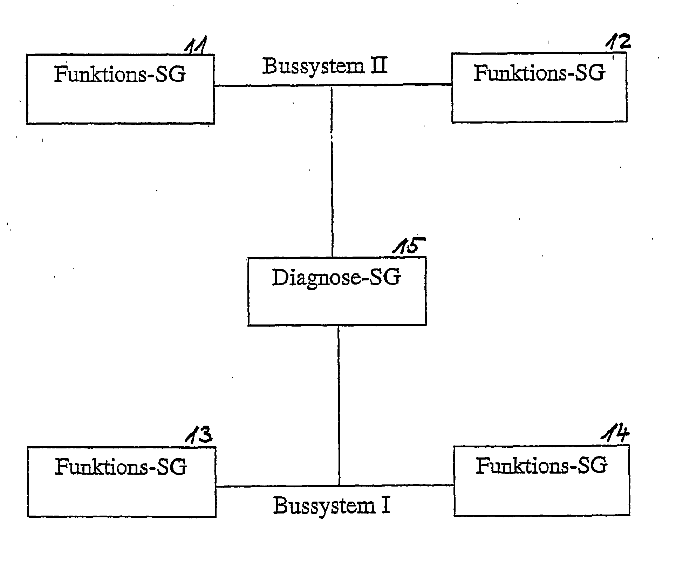

Die vorliegende Erfindung wird nun anhand der beigefügten Zeichnung näher erläutert, die ein Blockschaltbild eines Kraftfahrzeugsystems gemäß der vorliegenden Erfindung zeigt.

Die nachfolgend näher dargestellten Ausführungsformen stellen bevorzugte Ausführungsbeispiele der vorliegenden Erfindung dar.

Die Zeichnung gibt ein Blockschaltdiagramm eines vereinfachten Kraftfahrzeugsystems wieder. Das Kraftfahrzeugsystem umfasst vier Funktionssteuergeräte 11, 12, 13 und 14 sowie ein Diagnosesteuergerät 15. Die Funktionssteuergeräte 11 und 12 sind über ein Bussystem II an das Diagnosesteuergerät 15 angeschlossen. Die Funktionssteuergeräte 13 und 14 sind hingegen über ein Bussystem I mit dem Diagnosesteuergerät 15 verbunden.

Die Funktionssteuergeräte 11, 12, 13 und 14 liefern alle Eingangs- und Ausgangsdaten über die Bussysteme zum Diagnosesteuergerät 15. Dort läuft zentral ein komplettes Modell des Kraftfahrzeugsystems zur Detektierung von Fehlern. Es findet damit eine modellbasierte Diagnose in einem eigens dafür vorgesehenen Steuergerät statt. Mit Hilfe der erhaltenen Daten und der modellbasierten Diagnose werden in dem Diagnosesteuergerät 15 nun bei einem sogenannten nicht-in-Ordnung-Verhalten, z. B. bei zu starken Messabweichungen, die verursachenden Fehlerkandidaten ermittelt. Bei den vom Diagnosesteuergerät 15 aufgenommenen Daten handelt es sich um reine Rohdaten, die hinsichtlich einer Fehlerdiagnose nicht verarbeitet wurden.

Vielmehr werden reine Zustandsdaten beziehungsweise Messdaten an das Diagnosesteuergerät 15 geliefert.

In das Diagnosesteuergerät 15 ist eine sogenannte Diagnosemaschine integriert. Mit Hilfe dieser Diagnosemaschine, die nach dem Prinzip der "general diagnostic engine" nach de Kleer beziehungsweise darauf basierenden Weiterentwicklungen arbeitet und in der ein fahrzeugspezifisches Fehlerdiagnosemodell geladen ist, werden die Rohdaten beziehungsweise Symptome analysiert. Dabei werden mögliche Fehlerkandidaten ermittelt.

Die Bussysteme I und II können die üblichen Bordnetzwerke darstellen. Als Alternative kann auch ein eigenes Diagnosenetzwerk im Kraftfahrzeug verschaltet sein, so dass die einzelnen Funktionssteuergeräte sowohl einen Anschluss an einen üblichen Kraftfahrzeugbus als auch einen Anschluss an einen Diagnosebus besitzen. Auch diese Bussysteme sind in dem Diagnosesteuergerät 15 modelliert, so dass auch die jeweiligen Busfehler erkannt werden können.

Als Variante ist das Diagnosesteuergerät 15 nicht modellbasiert ausgestaltet, sondern z. B. wissensbasiert oder regelbasiert. Auch in diesem Fall liefern die einzelnen Steuergeräte 11 bis 14 hinsichtlich der Diagnose unverarbeitete Zustandsdaten an das Diagnosesteuergerät 15, das die Fehlerdiagnose zentral durchführt.

Da nicht jede Fehlerursache durch Eigendiagnose entsprechend dem Stand der Technik erkannt werden kann, werden sämtliche Zustandsdaten von den Funktionssteuergeräten 11 bis 14 zum Diagnosesteuergerät 15, dem Diagnosezentrum, gesandt. Die gemeinsame Verarbeitung der Zustandsdaten ggf. mit weiteren Symptominformationen führt dann wesentlich zielgerichteter zur entsprechenden Fehlerursache.

Durch die zentrale Fehlerdiagnose können auch die Meldeschauer verhindert werden, die durch eine Fehlerursache viele Fehlermeldungen der einzeln auswertenden Steuergeräte hervorrufen würden. Vielmehr wird durch die zentrale Auswertung der Zustandsdaten ein derartiger Fehler systemübergreifend bewertet, so dass in der Regel eine eindeutige Fehlerursache, von der mehrere Steuergeräte betroffen sind, ermittelt werden kann.

## Patentansprüche

1. On-Board-Diagnose-Verfahren für ein Kraftfahrzeugsystem, das mehrere miteinander vernetzte Steuergeräte (11,12,13,14) aufweist,
**gekennzeichnet durch**
Bereitstellen von ausschließlich Zustandsdaten, die keine Diagnoseinformation enthalten, **durch** die mehreren Steuergeräte (11,12,13,14) und
zentrales Durchführen einer vollständigen Fehlerdiagnose on-board für Steuergeräte und Komponenten des Kraftfahrzeugsystems auf der Grundlage der Zustandsdaten.

2. Verfahren nach Anspruch 1, wobei die Fehlerdiagnose basierend auf einem mathematischen Modell durchgeführt wird.

3. Verfahren nach Anspruch 1 oder 2, wobei die Fehlerdiagnose in einem eigens dafür vorgesehenen Diagnosenetzwerk des Kraftfahrzeugsystems durchgeführt wird.

4. On-Board-Diagnose-Vorrichtung eines Kraftfahrzeugsystems, das mehrere miteinander vernetzte Steuergeräte (11,12,13,14) aufweist,
**gekennzeichnet durch**
eine Aufnahmeeinrichtung, die mit dem Kraftfahrzeugsystem verbindbar ist, zur Aufnahme von ausschließlich Zustandsdaten, die keine Diagnoseinformation enthalten, von den mehreren Steuergeräten (11,12,13,14), und
eine Recheneinrichtung, die an die Aufnahmeeinrichtung angeschlossen ist, zum zentralen Durchführen einer vollständigen Fehlerdiagnose on-board für Steuergeräte und Komponenten des Kraftfahrzeugsystems auf der Grundlage der Zustandsdaten.

5. Vorrichtung nach Anspruch 4, wobei die Recheneinrichtung über ein mathematisches Modell verfügt, mit dem funktionale Zusammenhänge der mehreren Steuergeräte (11,12,13,14) einschließlich der damit gesteuerten Komponenten berechenbar sind, so dass aus den Zustandsdaten spezifische Fehler zielgerichtet im Kraftfahrzeug ermittelbar sind.

6. Vorrichtung nach Anspruch 4 oder 5, die über ein eigenes Diagnosenetzwerk verfügt, mit dem die einzelnen Steuergeräte (11,12,13,14) des Kraftfahrzeugsystems ausschließlich zum Zweck der Diagnose miteinander verbunden sind.

7. Vorrichtung nach einem der Ansprüche 4 bis 6, wobei die Vorrichtung (15) ein von den mehreren Steuergeräten (11,12,13,14) unabhängiges Gerät darstellt.

8. Vorrichtung nach einem der Ansprüche 4 bis 7, die in eines der mehreren Funktionssteuergeräte, die zur funktionellen Steuerung der einzelnen Komponenten des Kraftfahrzeugs dienen, integriert ist.

9. Kraftfahrzeugsystem mit mehreren Vorrichtungen (15) nach einem der Ansprüche 4 bis 8, wobei jede der Vorrichtungen (15) für eine Gruppe von Steuergeräten (11,12,13,14) zentral zur Fehlerdiagnose zuständig ist.

## Claims

1. A method for on-board diagnosis for a motor vehicle system comprising a plurality of interlinked control units (11, 12, 13, 14),
**characterised by**
the supply exclusively of status data which contain no diagnosis information, by the plurality of control units (11, 12, 13, 14) and
central execution of a full on-board diagnosis for control units and components of the motor vehicle system based on the status data.

2. The method according to Claim 1, wherein the fault diagnosis is carried out on the basis a mathematical model.

3. The method according to Claim 1 or 2, wherein the fault diagnosis is carried out n a diagnosis network of the motor vehicle system provided separately for this purpose.

4. An on-board diagnosis device of a motor vehicle system exhibiting a plurality of interlinked control units (11, 12, 13, 14),
**characterised by**
a recording device which can be connected to the motor vehicle system, for recording exclusively status data which contain no diagnosis information from the plurality of control units (11, 12, 13, 14), and
a calculating device which is connected to the recording device, for the central execution of a full on-board fault diagnosis for control units and components of the motor vehicle system on the basis of the status data.

5. The device according to Claim 4, wherein the calculating device is provided with a mathematical model with which functional relations of the plurality of control units (11, 12, 13, 14), including the components controlled with it, can be calculated so that specific faults can be determined in the motor vehicle from the status data.

6. The device according to Claim 4 or 5, which is provided with its own diagnosis network with which the individual control units (11, 12, 13, 14) of the motor vehicle system are connected to each other exclusively for the purpose of diagnosis.

7. The device according to any one of Claims 4 to 6, wherein the device (14) represents a unit that is independent of the plurality of control units (11 12, 13, 14).

8. The device according to any of Claims 4 to 7, which is integrated into one of the plurality of functional control units which are used for the functional control of the individual components of the motor vehicle.

9. A motor vehicle system with a plurality of devices (15) according to any one of Claims 4 to 8, wherein each of the devices (15) is centrally responsible for a group of control units (11, 12, 13, 14) for the purpose of the fault diagnosis.

## Revendications

1. Procédé de diagnostic embarqué pour un système d'un véhicule automobile, qui présente plusieurs appareils de commande mis en réseau les uns avec les autres (11, 12, 13, 14),
**caractérisé par**
une mise à disposition exclusivement de données d'état, qui ne contiennent aucune information de diagnostic, parmi les multiples appareils de commande (11, 12, 13, 14) et une réalisation centrale d'un diagnostic d'erreurs embarqué complet pour les appareils de commande et les composants du système d'un système d'un véhicule automobile sur la base des données d'état.

2. Procédé selon la revendication 1, à l'occasion de quoi le diagnostic d'erreurs est réalisé en se basant sur un modèle mathématique.

3. Procédé selon la revendication 1 ou 2, à l'occasion de quoi le diagnostic d'erreurs est réalisé dans un réseau de diagnostic du système d'un véhicule automobile prévu particulièrement à cet effet.

4. Dispositif de diagnostic embarqué d'un système d'un véhicule automobile, qui présente plusieurs appareils de commande (11, 12, 13, 14) mis en réseau les uns avec les autres,
**caractérisé par**
un dispositif de réception, qui est raccordable au système du véhicule automobile, pour la réception exclusivement de données d'état, qui ne contiennent aucune information de diagnostic, depuis les multiples appareils de commande (11, 12, 13, 14), et
un dispositif de calcul, qui est raccordé au dispositif de réception, pour la réalisation centrale d'un diagnostic d'erreurs complet embarqué pour les appareils de commande et les composants du système du véhicule automobile sur la base des données d'état.

5. Dispositif selon la revendication 4, dans lequel le dispositif de calcul dispose d'un modèle mathématique, à l'aide duquel les rapports fonctionnels des multiples appareils de commande (11, 12, 13, 14), en incluant les composants commandés avec, sont calculables, de sorte que des erreurs spécifiques dans le véhicule automobile peuvent être déterminées très précisément à partir des données d'état.

6. Dispositif selon la revendication 4 ou 5, qui dispose d'un réseau de diagnostic propre, avec lequel les appareils de commande individuels (11, 12, 13, 14) du système du véhicule automobile sont raccordés ensemble uniquement dans un but de diagnostic.

7. Dispositif selon l'une des revendications 4 à 6, dans lequel le dispositif (15) représente un appareil indépendant des multiples appareils de commande (11, 12, 13, 14).

8. Dispositif selon l'une des revendications 4 à 7, qui est intégré dans l'un des multiples appareils de commande de fonctionnement, qui servent à la commande fonctionnelle des composants individuels du véhicule automobile.

9. Système d'un véhicule automobile avec plusieurs dispositifs (15) selon l'une des revendications 4 à 8, dans lequel chaque dispositif (15) est centralement compétent pour un diagnostic d'erreurs pour un groupe d'appareils de commande (11, 12, 13, 14).
